Europäisches Patentamt

European Patent Office

Office européen des brevets

(19)

(11) **EP 1 571 166 A1**

(12) **EUROPEAN PATENT APPLICATION**
published in accordance with Art. 158(3) EPC

(43) Date of publication:
**07.09.2005 Bulletin 2005/36**

(51) Int Cl.⁷: **C08F 290/04**

(21) Application number: **03772808.6**

(86) International application number:
**PCT/JP2003/014568**

(22) Date of filing: **14.11.2003**

(87) International publication number:
**WO 2004/048427 (10.06.2004 Gazette 2004/24)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **28.11.2002 JP 2002344929**

(71) Applicant: **KANEKA CORPORATION
Osaka 530-8288 (JP)**

(72) Inventor: **FUKUI, Yoshifumi
Toyonaka-shi, Osaka 560-0085 (JP)**

(74) Representative: **Vossius & Partner
Siebertstrasse 4
81675 München (DE)**

(54) **POLYISOBUTYLENE/POLYOLEFIN COPOLYMER AND PROCESS FOR PRODUCING THE SAME**

(57) The present invention provides a copolymer including polyisobutylene-graft-polyolefin and/or polyisobutylene-block-polyolefin copolymer, a process for efficiently producing the copolymer, and a composition containing the copolymer. The copolymer is efficiently produced by cationic polymerization of monomers mainly including isobutylene in the presence of a vinylidene-terminated polyolefin macromonomer.

EP 1 571 166 A1

**Description**

Technical Field

The present invention relates to a novel polyisobutylene-polyolefin copolymer prepared by (living) cationic polymerization of monomers mainly comprising isobutylene in the presence of a vinylidene-terminated polyolefin macromonomer, and a process for producing the same.

Background Art

A process for efficiently synthesizing a polyisobutylene-graft-polyolefin and a polyisobutylene-block-polyolefin has not yet been established.

A conceivable general process for synthesizing the graft copolymer includes melt-graft reaction between a polyolefin, e.g., polypropylene, and polyisobutylene (PIB), butyl rubber (IIR), halogenated butyl rubber (XIIR), or the like. However, the graft efficiency is not high due to interfacial reaction.

As a process for synthesizing the block copolymer, direct block copolymerization using a Ziegler-Natta catalyst has been reported in Plast. Massy (1970), 3, pp. 11-13, in which the content of isobutylene is limited to a level of as low as 4 to 4.8%. Also, direct block polymerization using ethylene (not using propylene in any example) and isobutylene in the presence of a metallocene catalyst has been reported in PCT Japanese Translation Patent Publication No. 10-504048, in which a mixture of a homopolymer and block copolymer exists, and thus the block efficiency is not so high. Furthermore, polypropylene-graft-polyisobutylene can be efficiently produced by coordination polymerization of propylene in the presence of a polyisobutylene macromonomer (Japanese Patent Application No. 2002-176998, and Japanese Unexamined Patent Application Publication Nos. 10-316711 and 49-30462), but polyisobutylene-graft-polypropylene cannot be obtained.

Disclosure of Invention

An object of the present invention is to provide a process for efficiently synthesizing a polyisobutylene-graft-polyolefin and/or a polyisobutylene-block-polyolefin. Another object of the present invention is to provide a composition including the copolymer and a process for producing the copolymer.

As a result of intensive research for achieving the objects of the present invention, the present inventors completed the invention. The present invention relates to a polyisobutylene-polyolefin copolymer produced by cationic polymerization in the presence of a vinylidene-terminated polyolefin macromonomer to produce a polymer segment mainly composed of isobutylene.

In a preferred embodiment, the polyisobutylene-polyolefin copolymer is characterized in that the cationic polymerization is living cationic polymerization.

In a more preferred embodiment, the polyisobutylene-polyolefin copolymer is characterized in that the vinylidene-terminated polyolefin macromonomer is a vinylidene-terminated polypropylene macromonomer.

The present invention also relates to a composition containing a polyisobutylene-polyolefin copolymer and a polyolefin resin.

In a preferred embodiment, the composition is characterized in that the polyolefin resin is either polypropylene or a propylene random copolymer.

The present invention further relates to a process for producing a polyisobutylene-polyolefin copolymer.

Best Mode for Carrying Out the Invention

The present invention will be described in detail below. The present invention relates to a novel polyisobutylene-polyolefin copolymer produced by (living) cationic polymerization of monomers mainly comprising isobutylene in the presence of a vinylidene-terminated polyolefin macromonomer. More specifically, the present invention relates to a polyisobutylene-graft-polyolefin copolymer and/or a polyisobutylene-block-polyolefin copolymer.

(Vinylidene-terminated polyolefin macromonomer)

The vinylidene-terminated polyolefin macromonomer of the present invention may be produced by a method according to Japanese Unexamined Patent Application Publication No. 58-19309, J. Am. Chem. Soc. (1984), 106, 6355-6364, US 4,668,834, Macromolecules (1988), 21, 617-622, Polymer (1989), 30(3), 428-431, J. Am. Chem. Soc. (1992), 114, 1025-1032, and Journal of Polymer Science and Technology (Kobunshi Ronbunshu) (1992), 49, 847-854. However, the method is not limited to this. The method can relatively efficiently produce the vinylidene-terminated polyolefin macromonomer.

In the present invention, the term "vinylidene terminal" means a group represented by formula (1):

$$CH_2=CR- \tag{1}$$

(wherein R represents a hydrogen atom or a hydrocarbon group). In particular, R is preferably a methyl group from the viewpoint of high reactivity to cation.

As a catalyst, a metallocene catalyst, for example, zirconocene dichloride, zirconocene dimethyl, hafnocene dichloride, hafnocene dimethyl, titanocene dichloride, titanocene dimethyl, or the like can be used. When propylene is used as a monomer, amorphous polypropylene is produced. Although a cyclopentadienyl ring may have a substituent or a crosslinked structure, crystalline polypropylene is produced depending on the substituent or the crosslinked structure of the cyclopentadienyl ring. In the present invention, amorphous polypropylene is particularly preferred from the viewpoint that it is dissolved in a solvent in (living) cationic polymerization and thus easily causes efficient reaction with cation.

A co-catalyst is not particularly limited as long as it exhibits high activity, and alkylaluminoxane such as methylaluminoxane or the like is generally used. Other examples of the co-catalyst include boron compounds such as perfluorotriphenylborane and perfluorotetraphenylborate; superhighly reactive alkylaluminoxane (International Symposium on Future Technology for Polyolefin and Olefin Polymerization Catalysis at Tokyo Institute of Technology, 2001/3/21-24, OP-54); clay minerals (US 5,308,811); and magnesium chloride (Japanese Unexamined Patent Application Publication No. 6-1724).

When alkylaluminoxane is used as the co-catalyst, the ratio of aluminum to the metal of the catalyst is preferably 10 to 2,000 and more preferably 20 to 1,000. When a boron compound is used as the co-catalyst, the molar ratio of catalyst/boron compound is 1/0.1 to 1/10, preferably 1/0.5 to 1/2, and more preferably 1/0.75 to 1/1.25.

Also, alkyl aluminum such as trioctyl aluminum, triisobutyl aluminum, or trimethyl aluminum may be present as a scavenger (scavenger for water and impurities). Namely, the amounts of water and impurities contained in a system and a solvent are preferably as small as possible for polymerization activity. Similarly, an inert gas such as dry nitrogen or dry argon is preferably used as a polymerization atmosphere.

As the solvent, an aliphatic or aromatic solvent is preferred, and it may be halogenated. Examples of the solvent include toluene, ethylbenzene, chlorobenzene, hexane, heptane, cyclohexane, methylcyclohexane, butyl chloride, and methylene chloride. These solvents may be used in a mixture. A monomer such as propylene or the like may be used as the solvent.

The polymerization temperature is preferably -20°C to 100°C and more preferably 0°C to 50°C from the viewpoint that vinylidene terminal groups are easily produced, and a polyolefin having a proper molecular weight can be obtained.

At a low temperature, β-elimination causing vinylidene terminal groups tends to little occur, and polymerization activity tends to decrease, while at a high temperature, β-elimination tends to often occur to decrease the degree of polymerization. The number-average molecular weight is preferably 1,000 to 100,000, more preferably 2,000 to 50,000, and most preferably 3,000 to 30,000.

A pressure from normal pressure to 10 MPa is preferred because the system can be easily handled. The polymerization time is generally 30 minutes to 100 hours and preferably 1 hour to 24 hours.

Although the amount of the olefin monomer used is not limited, the molar ratio of monomer/active species (the catalyst or the co-catalyst which is smaller in amount) is preferably 10 to 109, more preferably 100 to 107, and most preferably 1000 to 105. When the molar ratio is excessively low, only a polymer with a low degree of polymerization can be obtained, while when the molar ratio is excessively high, the polymer yield based on the monomer tends to decrease.

The olefin monomer is not particularly limited, but propylene can be mainly used and also can be used alone. However, another monomer copolymerizable with propylene can be combined. Examples of the monomer copolymerizable with propylene include, without limitation to, olefins having 2 to 20 carbon atoms, such as ethylene, 1-butene, 1-hexene, 1-octene, 1-decene, 1-hexadecene, 1-eicosene, 4-methyl-1-pentene, 3-methyl-1-butene, vinylcyclohexane, cyclopentene, cyclohexene, cyclooctene, and norbornene; dienes such as 1,3-butadiene, isoprene, 1,5-cyclooctadiene, norbornadiene, 5-vinyl-2-norbornene, 5-phenyl-2-norbornene, dimethanooctahydronaphthalene, ethylidene norbornene, dicyclopentadiene, and 1,4-hexadiene. The amount of the monomer copolymerizable with propylene is not particularly limited, but the amount is preferably 50% by weight or less and more preferably 25% by weight or less from the viewpoint that in formula (1), R is preferably Me. In particular, by using a polyolefin macromonomer copolymerized with ethylene or unconjugated diene, the resultant graft and/or block copolymer has increased radical crosslinking and radical reactivity, and a product of radical crosslinking with a peroxide or the like and a product of modification with a polar vinyl monomer (maleic anhydride, glycidyl methacrylate, methyl methacrylate, butyl methacrylate, or the like) can be easily produced. The thus-modified product is imparted with a property such as reactivity, adhesiveness, paintability, or the like.

The vinylidene-terminated polypropylene macromonomer can be also produced by thermal decomposition of polypropylene according to "Functional Material (Kinozairyo)" (1997), 17(10), 5-12; Macromolecules (1995), 28(24), 7973-7978; and Polym. Prepr. (Am. Chem. Soc., Div. Polym. Chem.) (1979)20, 924. In this method, the propylene macromonomer mainly has vinylidene groups at its both ends.

(Polymer segment mainly comprising isobutylene)

Monomers mainly comprising isobutylene undergo cationic polymerization in the presence of the vinylidene-terminated polyolefin macromonomer, and preferably living cationic polymerization. The living cationic polymerization may be performed by, for example, the method according to Japanese Unexamined Patent Application Publication No. 11-293083. However, the method is not limited to this. This method can relatively efficiently produce a polyisobutylene polyolefin copolymer.

When the vinylidene-terminated polyolefin macromonomer is added after the cationic polymerization of the monomers mainly comprising isobutylene has been substantially finished, a block copolymer is substantially obtained. When the vinylidene-terminated polyolefin macromonomer is added before the start of the cationic polymerization of the monomers mainly comprising isobutylene or during the polymerization, a graft and/or block copolymer is obtained.

A polymer block mainly composed of isobutylene may be produced using isobutylene alone or isobutylene and another monomer as long as the content of isobutylene is 60% by weight or more. The other monomer is not particularly limited as long as it permits cationic polymerization. Examples of the other monomer include aromatic vinyl monomers, vinyl ethers, silanes, vinylcarbazole, β-pinene, acenaphthylene, aliphatic olefins, and dienes. These monomers can be used alone or in combination.

Examples of the aromatic vinyl monomers include styrene, o-, m-, or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m-, or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m-, or p-tert-butylstyrene, o-, m-, or p-methoxystyrene, o-, m-, or p-chloromethylstyrene, o-, m-, or p-bromomethylstyrene, silyl-substituted styrene derivatives, indene, and vihylnaphthalene.

Preferably, at least one aromatic vinyl monomer is selected from the group consisting of styrene, α-methylstyrene, p-methylstyrene, and indene, and styrene or α-methylstyrene, or a mixture thereof is particularly preferred from the viewpoint of cost. In particular, the aromatic vinyl monomer is preferably used for controlling a refractive index.

Examples of vinyl ether monomers include methyl vinyl ether, ethyl vinyl ether, (n- or iso)propyl vinyl ether, (n-, sec-, tert-, or iso)butyl vinyl ether, methyl propenyl ether, and ethyl propenyl ether.

Examples of silane monomers include vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, γ-methacryloyloxypropyltrimethoxysilane, and γ-methacryloyloxypropylmethyldimethoxysilane.

Also, the number-average molecular weight of the polyisobutylene-polyolefin copolymer is not particularly limited, but the number-average molecular weight is preferably 20,000 to 500,000 and more preferably 50,000 to 300,000 in view of flowability, processability, physical properties, etc.

Furthermore, the living cationic polymerization, i.e., the process for producing the polyisobutylene-polyolefin copolymer, is not particularly limited, but the copolymer can be obtained by polymerizing monomers mainly comprising isobutylene in the presence of a compound represented by formula (2).

$$(CR_1R_2X)_nR_3 \qquad\qquad (2)$$

(wherein X represents a halogen atom or a substituent selected from alkoxy and acyloxy groups having 1 to 6 carbon atoms, $R_1$ and $R_2$ each represent a hydrogen atom or a monovalent hydrocarbon group having 1 to 6 carbon atoms and may be the same or different, $R_3$ represents a polyvalent aromatic hydrocarbon group or a polyvalent aliphatic hydrocarbon group, and n represents a natural number of 1 to 6).

The compound represented by formula (2) functions as an initiator and produces carbocations in the presence of a Lewis acid or the like, the cations functioning as a starting point of cationic polymerization. Examples of the compound represented by formula (2) and used in the present invention include the following:

(1-chloro-1-methylethyl) benzene [$C_6H_5C(CH_3)_2Cl$], 1,4-bis(1-chloro-1-methylethyl)benzene [1,4-Cl$(CH_3)_2CC_6H_4C(CH_3)_2Cl$], 1, 3-bis (1-chloro-1-methylethyl) benzene [1,3-Cl$(CH_3)_2CC_6H_4C(CH_3)_2Cl$], 1,3,5-tris (1-chloro-1-methylethyl)benzene [1,3,5-(Cl$C(CH_3)_2)_3C_6H_3$], and 1,3-bis(1-chloro-1-methylethyl)-5-(tert-butyl)benzene [1,3($C(CH_3)_2Cl)_2$-5-($C(CH_3)_3)C_6H_3$].

Among these compounds, bis(1-chloro-1-methylethyl)benzene [$C_6H_4(C(CH_3)_2Cl)_2$] and tris(1-chloro-1-methylethyl) benzene [(Cl$C(CH_3)_2)_3C_6H_3$] are particularly preferred (bis(1-chloro-1-methylethyl)benzene is also named bis(α-chloroisopropyl)benzene, bis(2-chloro-2-propyl)benzene, or dicumyl chloride, and tris(1-chloro-1-methylethyl)benzene is also named tris(α-chloroisopropyl)benzene, tris(2-chloro-2-propyl)benzene, or tricumyl chloride).

In addition, a Lewis acid can be allowed to coexist. As the Lewis acid, any one which can be used for cationic polymerization may be used. Preferred examples of the Lewis acid include metal halides such as $TiCl_4$, $TiBr_4$, $BCl_3$, $BF_3$, $BF_3 \cdot OEt_2$, $SnCl_4$, $SbCl_5$, $SbF_5$, $WCl_6$, $TaCl_5$, $VCl_5$, $FeCl_3$, $ZnBr_2$, $AlCl_3$, and $AlBr_3$; and organic metal halides such as $Et_2AlCl$ and $EtAlCl_2$.

In particular, $TiCl_4$, $BCl_3$, and $SnCl_4$ are preferred in view of catalytic ability and industrially easy availability. The amount of the Lewis acid used is not particularly limited, but the amount can be determined in consideration of the polymerizability and polymerization concentration of the monomer used. The amount can be generally determined to 0.1 to 200 molar equivalents and preferably 1 to 100 molar equivalents relative to the amount of the compound represented by formula (2).

Furthermore, if required, an electron donor component can be allowed to coexist. The electron donor component possibly has the effect of stabilizing grown carbocations and/or the effect of trapping protons in the system during cationic polymerization, and thus a polymer with a narrow molecular weight distribution and a controlled structure can be produced by adding the electron donor. Usable examples of the electron donor component include, but not limited to, pyridines such as α-picoline and di-tert-butylpyridine; amines such as triethylamine; amides such as dimethylacetamide; sulfoxides such as dimethylsulfoxide; esters; phosphorus compounds; and metallic compounds each containing an oxygen atom bonded to a metal atom, such as tetraisopropoxytitanium.

The polymerization can be performed in an organic solvent according to demand, and any solvent can be used as the organic solvent without any limitation as long as the polymerization is not basically inhibited. Examples of the organic solvent include halogenated hydrocarbons such as methyl chloride, dichloromethane, chloroform, ethyl chloride, dichloroethane, n-propyl chloride, n-butyl chloride, and chlorobenzene; aromatic hydrocarbons such as benzene, toluene, xylene, ethylbenzene, propylbenzene, and butylbenzene; straight aliphatic hydrocarbons such as ethane, propane, butane, pentane, hexane, heptane, octane, nonane, and decane; branched aliphatic hydrocarbons such as 2-methylpropane, 2-methylbutane, 2,3,3-trimethylpentane, and 2,2,5-trimethylhexane; alicyclic hydrocarbons such as cyclohexane, methylcyclohexane, and ethylcyclohexane; and paraffin oils produced by hydrogenation refining of petroleum fractions.

These solvents can be used alone or in combination in view of a balance between polymerizability, solubility of the produced polymer, and the like.

The amount of the solvent used is determined so that the polymer content is 1 to 50% by weight and preferably 5 to 35% by weight in view of the viscosity of the resultant polymer solution and easy removal of heat.

In actual polymerization, the components are mixed under cooling, for example, at a temperature of -100°C to 0°C. In order to balance the energy cost and polymerization stability, the temperature is preferably in a range of -80°C to -30°C.

In the present invention, the ratio of the polyolefin macromonomer chemically bonded (introduced) in the polyisobutylene-polyolefin copolymer is not particularly limited, and can be arbitrarily selected. However, the ratio is 1 to 90% by weight and preferably 10 to 60% by weight relative to 100% by weight of the copolymer.

The number of the polyolefin macromonomers contained per molecule of the polyisobutylene-polyolefin copolymer of the present invention is 0.1 to 50 and preferably 1 to 20.

In some cases, the polyisobutylene-polyolefin copolymer contains unconverted polyolefin macromonomers and polyisobutylene free polymer based on the total weight. However, the copolymer preferably contains substantially neither unconverted macromonomer nor free polymer. This can be achieved by controlling various polymerization conditions.

(Polyolefin resin)

The polyisobutylene-polyolefin copolymer of the present invention can be also used as a composition containing a polyolefin resin. Usable examples of the polyolefin resin include α-olefin homopolymers, random copolymers, and block copolymers, and mixtures thereof; random copolymers, block copolymers, and graft copolymers of α-olefins and other unsaturated monomers; and modified polymers produced by halogenating, oxidizing, or sulfonating these copolymers. These resins can be used alone or in combination.

Specific examples of the polyolefin resin include polyethylene resins such as polyethylene, ethylene-propylene copolymers, ethylene-propylene-unconjugated diene copolymers, ethylene-butene copolymers, ethylene-hexene copolymers, ethylene-octene copolymers, ethylene-vinyl acetate copolymers, ethylene-vinyl alcohol copolymers, ethylene-methyl methacrylate copolymers, ethylene-ethyl acrylate copolymers, and chlorinated polyethylene; polypropylene resins such as polypropylene, propylene-ethylene random copolymers, propylene-butylene random copolymers, propylene-hexene random copolymers, propylene-octene random copolymers, propylene-ethylene block copolymers, chlorinated polypropylene; polybutene; polyisobutylene; butyl rubber; halogenated butyl rubber; polymethylpentene; and (co)polymers of cyclic olefins. Among these resins, the polyethylene resins and polypropylene resins, particularly polypropylene and propylene random copolymers (random polypropylene), can be preferably used from the viewpoint of cost and a balance between the physical properties of thermoplastic resins, as described below.

The compounding amount of the polyolefin resin is 5 to 2000 parts by weight, preferably 30 to 1000 parts by weight, and more preferably 20 to 500 parts by weight, relative to 100 parts by weight of the polyisobutylene-polyolefin copolymer. With a compounding amount of less than 5 parts by weight, the mechanical strength and moldability of the resultant thermoplastic resin composition degrade, while with a compounding amount of over 2000 parts by weight, the rubber-like feel of the resultant thermoplastic resin composition degrades.

(Other compounding agent)

In view of improvement in physical properties or economical advantage, a softening agent and a filler can be mixed with the resin composition of the present invention.

Examples of the softening agent include mineral oil-type, vegetable oil-type, and synthetic softening agents for various rubbers or resins. Specific examples of the mineral oil-type agents include naphthenic and paraffinic process oils. Specific examples of the vegetable oil-type agents include castor oil, cottonseed oil, linseed oil, rapeseed oil, soybean oil, palm oil, coconut oil, peanut oil, Japan wax, pine oil, and olive oil. Specific examples of the synthetic agents include polybutene and low-molecular-weight polybutadiene. Among these agents, paraffinic process oil and polybutene are preferably used from the viewpoint of compatibility or a balance between the physical properties. The softening agents can be used in combination of two or more for obtaining desired viscosity and physical properties.

The compounding amount of the softening agent is 5 to 1000 parts by weight, preferably 10 to 500 parts by weight, and more preferably 20 to 300 parts by weight relative to 100 parts by weight of the polyisobutylene-polyolefin copolymer. With a compounding amount of less than 5 parts by weight, the rubber-like feel of the resultant thermoplastic resin composition degrades, while with a compounding amount of over 1000 parts by weight, bleedout of the softening agent tends to occur.

Preferred examples of the filler include scale-like inorganic fillers such as clay, diatomite, silica, talc, barium sulfate, calcium carbonate, magnesium carbonate, metal oxides, mica, graphite, and aluminum hydroxide; granular or powdery solid fillers such as various metal powders, wood chips, glass powder, ceramic powder, carbon black, and granular or powdery polymers; and other various natural or artificial short fibers and long fibers. When a hollow filler, e.g., an inorganic hollow filler such as glass balloon or silica balloon, or an organic hollow filler comprising polyvinylidene fluoride or polyvinylidene fluoride copolymer, is compounded, reduction in weight can be achieved. In order to further decrease the weight and improve various physical properties such as impact absorption, any one of various foaming agents can be mixed, or a gas can be mechanically mixed during mixing or the like.

The thermoplastic resin composition of the present invention can also be mixed with an antioxidant and/or an ultraviolet absorber according to demand. Furthermore, other additives such as a flame retardant, an antimicrobial agent, a light stabilizer, a colorant, a flowability improver, a lubricant, a anti-blocking agent, an antistatic agent, a crosslinking agent, and a crosslinking auxiliary can also be added. These additives can be used alone or in combination or two or more. In addition, any of various thermoplastic resins, thermosetting resins, and thermoplastic elastomers can be mixed within a range which does not degrade the performance of the thermoplastic resin composition of the present invention.

The composition including the polyisobutylene-polyolefin copolymer (generally transparent product) and the polyolefin resin of the present invention, particularly the polypropylene or the propylene random copolymer composition, is transparent (low turbidity) and soft or high in impact resistance, and has gas barrier properties. The polypropylene or the propylene random copolymer may be either amorphous or crystalline, but it is preferably crystalline from the viewpoint of easy molding. The polyisobutylene-polyolefin copolymer may contain an unconverted polyolefin macromonomer or polyisobutylene free polymer. The composition may contain isobutylene rubber such as polyisobutylene (PIB), isobutylene-isoprene rubber (IIR), or halogenated IIR. In this case, the copolymer functions as a compatibilizer and produces a composition which is relatively transparent and soft or high in impact resistance, and has a gas barrier property. These materials are preferably added by a general melt-kneading process. In particular, when the crystalline polypropylene or propylene random copolymer is added, a nucleating agent for polypropylene resins (for example, sorbitol nucleating agent; Gelol MD and Gelol DH manufactured by New Japan Chemical Co., Ltd., and Millad 3940 and Millad 3988 manufactured by Milliken Company, phosphate nucleating agent; Adekastab NA-11 and Adekastab NA-21 manufactured by Asahi Denka Co., LTD.) can also be added to obtain a composition which is higher transparent and softer or higher in impact resistance, and has higher gas barrier properties.

The manufacturing process including the addition method and the kneading method for the thermoplastic resin composition of the present invention is not particularly limited, and any known method can be used. For example, the above-described components and, if required, the additive components, can be melt-kneaded with a heating kneader, for example, a single-screw extruder, a double-screw extruder, a roller, a Banbary mixer, a Brabender mixer, a kneader, a high-shear mixer, or the like. The kneading order of the components is not particularly limited and can be determined according to the apparatus used, workability, or the physical properties of the resultant thermoplastic resin composition.

Examples

The present invention will be described in further detail below with reference to examples. The present invention is not limited to these examples, and modifications can be appropriately made within the scope of the gist of the invention.

In the present invention, turbidity was measured by an integrating-sphere photoelectric photometry (JIS K 7105) using Model NDH-300A manufactured by Nippon Denshoku Co., Ltd. The turbidity is also referred to as "haze value" and defined as an optical property that light is scattered and absorbed by a sample without passing therethrough. Also, hardness was measured using a press sheet (6 mm in thickness) as a specimen according to JIS K 6253.

(Production Example 1) (Vinylidene-terminated polypropylene macromonomer)

In a 100-mL nitrogen-purged autoclave, 33.7 mL of dehydrated toluene, 3.3 mmol (in terms of Al) of methylaluminoxane (MAO: manufactured by Tosoh Fine Chem Co., PMAO-L), and 6.7 μmol of zirconocene dichloride ($Cp_2ZrCl_2$: manufactured by Aldrich Company) were charged, and the resultant mixture was cooled with a dry ice/methanol bath. The pressure in the system was slightly decreased, and 446 mmol of propylene was introduced. After polymerization at 0°C for 6 hours in an ice bath, the polymerization solution was poured into 500 mL of a methanol solution of hydrochloric acid, and the precipitate was recovered.

The yield was 11.6 g, and the yield percentage was 62.0%. According to GPC (chloroform, 40°C, in terms of PS), the number-average molecular weight (Mn) was 8,430, and the molecular weight distribution (Mw/Mn) was 1.61. In 1H-NMR (300 MHz, deuterochloroform), a vinylidene proton peak was observed near 4.7 ppm.

(Production Examples 2 to 7)

A vinylidene-terminated polypropylene macromonomer was synthesized by the same procedures as in Production Example 1. The synthetic conditions are shown in Table 1 together with those in Production Example 1. The results are shown in Table 2.

Table 1

| | $Cp_2MtCl_2$ (μmol) | MAO (mmol) (Al) | Toluene (mL) | Propylene (mmol) | Polymerization temperature (°C) | Polymerization time (hr) |
|---|---|---|---|---|---|---|
| Production Example 1 | 6.7(Zr) | 3.3 | 33.7 | 446 | 0 | 6 |
| Production Example 2 | 6.7(Zr) | 3.3 | 33.7 | 446 | 0 | 8 |
| Production Example 3 | 6.7(Zr) | 3.3 | 33.7 | 357 | 0 | 7 |
| Production Example 4 | 20(Hf) | 10 | 84 | 1070 | room temperature | 6 |
| Production Example 5 | 20(Hf) | 10 | 84 | 1070 | room temperature | 6 |

Table 1 (continued)

|  | Cp$_2$MtCl$_2$ (μmol) | MAO (mmol) (Al) | Toluene (mL) | Propylene (mmol) | Polymerization temperature (°C) | Polymerization time (hr) |
|---|---|---|---|---|---|---|
| Production Example 6 | 20(Zr) | 10 | 84 | 1070 | 0 | 6 |
| Production Example 7 | 20(Zr) | 10 | 84 | 1070 | 0 | 6 |

Table 2

|  | Yield (g) | Mn | Mw/Mn |
|---|---|---|---|
| Production Example 1 | 11.6 | 8430 | 1.61 |
| Production Example 2 | 11.6 | 6020 | 1.97 |
| Production Example 3 | 9.35 | 7550 | 1.48 |
| Production Example 4 | 23.0 | 30300 | 1.59 |
| Production Example 5 | 30.6 | 24100 | 1.80 |
| Production Example 6 | 20.0 | 4550 | 1.40 |
| Production Example 7 | 20.4 | 4760 | 1.44 |

(Example 1) (Polyisobutylene-polypropylene copolymer)

In a 500-mL nitrogen-purged separable flask, 187.3 mL of dehydrated butyl chloride and 20.8 mL of dehydrated hexane were charged, and the resultant mixture was cooled to -73°C with a dry ice/methanol bath. Then, 688 mmol of isobutylene (IB: manufactured by Kuraray Co., Ltd.) was introduced, and 0.84 mmol of p-dicumyl chloride (p-DiCumCl), 1.51 mmol of α-picoline (α-Py: manufactured by Wako Pure Chemical Industries, Ltd.), and 5.46 mmol of titanium tetrachloride (TiCl$_4$: manufactured by Wako Pure Chemical Industries, Ltd.) were added to the mixture, followed by polymerization for 85 minutes. Then, 10.8 g of the vinylidene-terminated polypropylene macromonomer (v-PP) synthesized in Production Example 1, a solution of 28.1 mL of dehydrated butyl chloride, 3.12 mL of dehydrated hexane, and 0.227 mmol α-picoline were added dropwise to the mixture, followed by reaction for 4 hours. A small amount of methanol was added to the reaction solution to deactivate the system, and then the system was washed with water three times. Then, the solvent was distilled off to obtain a polymer.

The yield was 44.4 g, and the yield percentage was 89.8%. According to GPC (chloroform, 40°C, in terms of PS), the number-average molecular weight (Mn) was 55,300, and the molecular weight distribution (Mw/Mn) was 1.20.

(Examples 2 to 8)

A polyisobutylene-polypropylene copolymer was synthesized by the same procedures as in Example 1. The synthetic conditions are shown in Table 3 together with those in Example 1. The results are shown in Table 4.

Table 3

| | p-DiCumCl (mmol) | TiCl4 (mmol) | α-Py (mmol) | IB (mmol) | IB Polymerization temperature (°C) | IB Polymerization time (min) | v-PP (g) | α-Py (mmol) | Reaction temperature (°C) | Reaction time (hr) |
|---|---|---|---|---|---|---|---|---|---|---|
| Example 1 | 0.84 | 5.46 | 1.51 | 688 | -73 | 85 | 10.8 (Production Example 1) | 0.227 | -73 | 4 |
| Example 2 | 1.13 | 7.31 | 2.02 | 688 | -73 | 100 | 10.5 (Production Example 2) | 1.01 | -73 | 6 |
| Example 3 | 0.367 | 14.7 | 3.67 | 688 | -74 | 65 | 3.63 (Production Example 3) | 1.84 | -74 | 6 |
| Example 4 | 0.367 | 14.7 | 3.67 | 688 | -73 | 80 | 16 (Production Example 4) | 1.84 | -73 | 5 |
| Example 5 | 0.367 | 14.7 | 3.67 | 688 | -73 | Note | 12.9 (Production Example 5) | 1.84 | -73 | 7 |
| Example 6 | 0.367 | 14.7 | 3.67 | 688 | -74 | Note | 12.8 (Production Example 6) | 1.84 | -74 | 7.5 |
| Example 7 | 0.184 | 14.7 | 3.67 | 688 | -73 | Note | 12.8 (Production Example 7) | 1.84 | -73 | 7 |
| Example 8 | 0.184 | 14.7 | 1.84 | 688 | -72 | Note | 10 (Production Example 7) | 1.84 | -72 | 7.5 |

Note: V-PP was added before start of IB polymerization.

9

Table 4

|  | Yield (g) | Mn | Mw/Mn |
|---|---|---|---|
| Example 1 | 44.4 | 55300 | 1.20 |
| Example 2 | 50.0 | 51300 | 1.17 |
| Example 3 | 40.4 | 102000 | 1.18 |
| Example 4 | 55.0 | 124000 | 1.16 |
| Example 5 | 53.6 | 120000 | 1.27 |
| Example 6 | 53.5 | 78900 | 1.39 |
| Example 7 | 52.0 | 86000 | 1.51 |
| Example 8 | 51.4 | 92000 | 1.49 |

(Examples 9 and 10) (Composition)

In a 30-ml Plastomill (manufactured by Toyo Seiki Co. Ltd.), 20 g of random polypropylene (manufactured by Grand Polymer Co., J226EA, MI20) and each of 3g and 6g of the polyisobutylene-polypropylene copolymer synthesized in Example 1 were charged, and the resultant mixture was kneaded at 200°C and 100 rpm for 10 minutes. Then, a press sheet was formed using a spacer having a 1 mm of thickness according to a general method (conditions: 200°C with no pressure for 10 minutes, 200°C and 1 kgf/m$^2$ for 10 minutes, 200°C and 50 kgf/m$^2$ for 10 minutes, and then room temperature and 50 kgf/m$^2$ for 5 minutes).

The turbidities (haze) of the press sheets were 32% and 33%, respectively, and the hardnesses (Shore D, 15s) were 48 and 42, respectively. The results are summarized in Table 5. These sheets had low haze and low hardness and were thus superior to those in comparative examples which will be described below.

(Examples 11 to 19)

A composition was prepared by the same procedures as in Examples 9 and 10. The conditions and results are shown in Table 5.

Table 5

|  | Composition (g/g) | Hz (%) | Hardness |
|---|---|---|---|
| Example 9 | Random polypropylene/copolymer of Example 1 (20/3) | 32 | 48 |
| Example 10 | Random polypropylene/copolymer of Example 1 (20/6) | 33 | 42 |
| Example 11 | Random polypropylene/copolymer of Example 2 (20/3) | 36 | 44 |
| Example 12 | Random polypropylene/copolymer of Example 2 (20/6) | 34 | 46 |
| Example 13 | Random polypropylene/copolymer of Example 3 (20/6) | 29 | 39 |
| Example 14 | Random polypropylene/copolymer of Example 4 (20/3) | 27 | 46 |
| Example 15 | Random polypropylene/copolymer of Example 4 (20/6) | 28 | 46 |
| Example 16 | Random polypropylene/copolymer of Example 5 (20/6) | 27 | 48 |
| Example 17 | Random polypropylene/copolymer of Example 6 (20/6) | 23 | 48 |
| Example 18 | Random polypropylene/copolymer of Example 7 (20/6) | 26 | 43 |
| Example 19 | Random polypropylene/copolymer of Example 8 (20/6) | 27 | 46 |

(Comparative Examples 1 to 3)

A kneaded product comprising only random polypropylene, a composition comprising random polypropylene and butyl rubber (Butyl 065 manufactured by Japan Butyl Co., Ltd., Mn 130,000) at a ratio of 20 g/3 g, and a composition comprising random polypropylene and polyisobutylene (having allyl groups at both ends, Mn 45,000) at a ratio of 20 g/3 g were prepared by the same procedures as in Examples 9 and 10. The turbidities (haze) of press sheets were 31%, 47%, and 42%, respectively, and the hardnesses were 58, 50, and 43, respectively. The results are shown in Table 6.

Table 6

|  | Composition (g/g) | Hz (%) | Hardness |
|---|---|---|---|
| Comp. Example 1 | Random polypropylene (20) | 31 | 58 |
| Comp. Example 2 | Random polypropylene/butyl rubber (20/3) | 47 | 50 |
| Comp. Example 3 | Random polypropylene/polyisobutylene (20/3) | 42 | 43 |

Industrial Applicability

As described above, it is found that living cationic polymerization of monomers mainly comprising isobutylene in the presence of a vinylidene-terminated polyolefin macromonomer produces a polyisobutylene-polyolefin copolymer having a relatively low molecular weight distribution. It is also found that a transparent soft polypropylene composition can be obtained by adding the polyisobutylene-polyolefin copolymer to a commercially available polypropylene or propylene copolymer.

These materials are expected to have impulsive vibration absorption and gas-liquid barrier properties, and are obviously suitable as substitutes for soft vinyl chloride.

**Claims**

1.  A polyisobutylene-polyolefin copolymer produced by cationic polymerization in the presence of a vinylidene-terminated polyolefin macromonomer to produce a polymer segment mainly composed of isobutylene.

2.  The polyisobutylene-polyolefin copolymer according to claim 1, wherein the cationic polymerization is living cationic polymerization.

3.  The polyisobutylene-polyolefin copolymer according to claim 1 or 2, wherein the vinylidene-terminated polyolefin macromonomer is a vinylidene-terminated polypropylene macromonomer.

4.  A composition comprising the polyisobutylene-polyolefin copolymer according to any one of claims 1 to 3 and a polyolefin resin.

5.  The composition according to claim 4, wherein the polyolefin resin is polypropylene, a propylene copolymer, or a mixture thereof.

6.  A process for producing a polyisobutylene-polyolefin copolymer, comprising performing cationic polymerization in the presence of a vinylidene-terminated polyolefin macromonomer to produce a polymer segment mainly composed of isobutylene.

7.  The process according to claim 6, wherein the cationic polymerization is living cationic polymerization.

8.  The process according to claim 6 or 7, wherein the vinylidene-terminated polyolefin macromonomer is a vinylidene-terminated polypropylene macromonomer.

## INTERNATIONAL SEARCH REPORT

| International application No. |
| --- |
| PCT/JP03/14568 |

A. CLASSIFICATION OF SUBJECT MATTER
     Int.Cl$^7$  C08F290/04

According to International Patent Classification (IPC) or to both national classification and IPC

B. FIELDS SEARCHED

Minimum documentation searched (classification system followed by classification symbols)
     Int.Cl$^7$  C08F290/00-290/14

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | EP 864593 A  (BASF AG.),<br>16 September, 1998 (16.09.98),<br>Claims<br>& DE 19709667 A          & JP 10-316711 A | 1-8 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    16 February, 2004 (16.02.04) | Date of mailing of the international search report<br>    02 March, 2004 (02.03.04) |
| --- | --- |
| Name and mailing address of the ISA/<br>    Japanese Patent Office | Authorized officer |
| Facsimile No. | Telephone No. |

Form PCT/ISA/210 (second sheet) (July 1998)

## INTERNATIONAL SEARCH REPORT

<table>
<tr><td colspan="2">International application No.<br>PCT/JP03/14568</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | US 3786116 A  (R. Milkovich),<br>15 January, 1974 (15.01.74),<br>Claims<br>& US 3832423 A          & US 3842050 A<br>& US 3842057 A          & US 3842058 A<br>& US 3742059 A          & US 3842146 A<br>& US 3846393 A          & US 3862010 A<br>& US 3862267 A          & US 3862077 A<br>& US 3862097 A          & US 3862098 A<br>& US 3862102 A          & US 3879494 A<br>& US 3928255 A          & US 3989768 A<br>& US 4085168 A          & GB 1392612 A<br>& GB 1432782 A          & GB 1432783 A<br>& GB 1496931 A          & DE 2208340 A<br>& DE 2318809 A          & DE 2500494 A<br>& DE 2265744 A          & JP 49-30462 A<br>& JP 50-116586 A        & JP 51-125186 A<br>& JP 54-33589 A.        & JP 54-21871 B<br>& JP 60-186516 A        & BE 779589 A<br>& BE 798165 A           & BE 824306 A<br>& AU 7723875 A          & NL 7202231 A<br>& NL 7305190 A          & NL 7500340 A<br>& FR 2127676 A          & FR 2197908 A<br>& FR 2273018 A          & ZA 7200820 A<br>& ZA 7302134 A          & ZA 7500145 A<br>& IT 947575 B           & IT 982767 B<br>& IT 982767 A           & IT 1030092 B<br>& DD 108102 A           & DD 108102 C<br>& DD 111685 A           & DD 111685 C<br>& DD 116461 A           & ES 400008 A<br>& ES 413669 A           & ES 433703 A<br>& ES 439947 A           & FI 750060 A<br>& FI 57267 B            & NO 750074 A<br>& NO 142867 B           & NO 142868 B<br>& SE 7500142 A          & SE 7600251 A<br>& SE 7605560 A          & SE 405010 B<br>& SE 417101 B           & SE 8300048 A<br>& DK 3775 A             & DK 160151 B<br>& BR 7500129 A          & AT 329473 A<br>& AT 144772 A           & AT 467876 A<br>& AT 15475 A            & NZ 176356 A<br>& CA 1037636 A          & CA 1037635 A<br>& CA 1060140 A          & CA 1083290 A<br>& CH 606120 A           & CH 614963 A<br>& SU 671734 A           & SU 694078 A<br>& CS 194160 A           & CS 194178 A<br>& CS 194179 A           & CS 194178 P<br>& CS 194179 P | 1-8 |
| A | WO 03/020779 A  (Kaneka Corp.),<br>13 March, 2003 (13.03.03),<br>Claims<br>& JP 15-147032 A | 1-8 |

Form PCT/ISA/210 (continuation of second sheet) (July 1998)